# EUROPÄISCHE PATENTSCHRIFT

(11) **EP 0 848 990 B1**
(45) Veröffentlichungstag und Bekanntmachung des Hinweises auf die Patenterteilung: **27.02.2002**
(21) Anmeldenummer: 97122014.0
(22) Anmeldetag: 13.12.1997
(51) Int. Cl.: B01J 19/24, B01J 19/00, B01J 12/00, C01C 3/02, B01J 4/00, B01J 35/00

(54) **Reaktor zur Durchführung endothermer katalytischer Reaktionen**
Reactor for carrying out endothermal catalytic reactions
Réacteur pour effectuer des réactions catalytiques endothermes

(30) Priorität: 21.12.1996 DE 19653991
(43) Veröffentlichungstag der Anmeldung: 24.06.1998
(73) Patentinhaber: Degussa AG, 40474 Düsseldorf (DE)
(72) Erfinder: von Hippel, Lukas, Dr., 63755 Alzenau (DE); Arntz, Dietrich, Dr., Mobile, AL 36695 (US); Kuttruf, Bernd, 63863 Eschau (DE); Walter, Brigitta, 63571 Gelnhausen-Meerholz (DE)

(56) Entgegenhaltungen:
- EP-A- 0 639 548
- EP-A- 0 752 390
- WO-A-96/32188
- US-A- 3 505 030
- US-A- 3 860 535
- US-A- 4 495 153
- US-A- 5 112 578

## Beschreibung

Die Erfindung betrifft einen Reaktor zur Durchführung endothermer katalytischer Reaktionen. Eine beispielhafte endotherme katalytische Reaktion ist die Umsetzung von Methan und Ammoniak zu Blausäure in Gegenwart eines Katalysators.

Die katalytische Umsetzung von Methan und Ammoniak zu Blausäure wird in Ullmann's Encyclopedia of Industrial Chemistry, 5th Ed. (1987), Vol. A8, Seiten 162 - 163 beschrieben. Die Umsetzung erfolgt in Gegenwart eines geeigneten Katalysators bei Temperaturen von etwa 1000 bis 1350°C. Die Reaktion kann zum Beispiel in Rohrbündelreaktoren durchgeführt werden. Die Reaktionsrohre bestehen im wesentlichen aus Aluminiumoxid und sind auf ihren Innenflächen mit einer katalytisch wirksamen Beschichtung versehen, welche meist Platin enthält. Die Reaktionsrohre sind in einer Brennkammer aufgehängt und werden durch eine in einer Brennkammer ablaufende Verbrennung eines Brenngases, gewöhnlich Methan oder Erdgas, in einem sauerstoffhaltigen Gas von außen auf die Reaktionstemperatur aufgeheizt. Die Reaktionsrohre sind typischerweise. etwa 2 m lang und weisen Innendurchmesser von 16 bis 18 mm auf.

Wesentlich für die Wirtschaftlichkeit eines solchen Verfahrens ist die Höhe des Energiebedarfs für die Erzeugung von einem Kilogramm des gewünschten Produktes. Im Falle des beschriebenen Rohrbündelreaktors werden etwa 40 MJ für die Herstellung von einem Kilogramm Blausäure benötigt.

In der nicht vorveröffentlichten europäischen Patentanmeldung EP 0 752 390 A1 wird ein Verfahren zur Herstellung von Blausäure beschrieben, bei dem statt des Rohrbündelreaktors eine monolithische Anordnung von Heiz- und Reaktionskanälen verwendet wird. Die Reaktionskanäle sind auf ihren Innenwandflächen mit einem Katalysator beschichtet und werden von den Reaktanden durchströmt.

Die notwendige Reaktionstemperatur wird hierbei durch Verbrennen eines Brenngases in den Heizkanälen erzeugt. Hierzu wird ein Gemisch aus Brenngas und Verbrennungsluft im Gegenstrom zu den Reaktanden durch die Heizkanale geführt. Beim Eintritt in die Heizkanäle wird das Gasgemisch durch elektrische Heizdrähte gezündet, die in die Heizkanäle eingeführt sind.

Durch die Zusammenfassung von Heiz- und Reaktionskanälen in einer monolithischen Anordnung kann der pro Kilogramm erzeugter Blausäure benötigte Energiebedarf gegenüber dem Rohrbündelreaktor nahezu halbiert werden. Außerdem kann die Raum-Zeit-Ausbeute wesentlich erhöht werden.

Trotz dieser vorteilhaften Eigenschaften des monolithischen Gegenstromreaktors sind weitere Verbesserungen notwendig, da die Verbrennung des Brenngas/Luft-Gemisches in den Heizkanälen nicht ausreichend stabil ist.

Die DE 34 02 713 A1 beschreibt einen aus einer Vielzahl von parallelen Platten bestehenden Gegenstromreaktor für die Durchführung endothermer Reaktionen mit Reaktionstemperaturen bis zu 800°C. Die endotherme Reaktion läuft in einem ersten Gasgemisch ab, während die Reaktionswärme durch eine exotherme Reaktion in einem zweiten Gasgemisch zur Verfügung gestellt wird. Erstes Gasgemisch und zweites Gasgemisch werden im Gegenstrom zueinander durch den Plattenreaktor geführt, wobei die Zwischenräume zwischen den Platten räumlich abwechselnd vom ersten und zweiten Gasgemisch durchströmt werden. Die Zwischenräume zwischen den Platten sind mit Schüttgutkatalysatoren gefüllt, die die jeweilige endotherme beziehungsweise exotherme Reaktion katalysieren.

Die DE 42 14 579 A1 offenbart in Figur 1 unter anderem einen Gegenstromreaktor, der bei stark exothermen oder stark endothermen Reaktionen zur Anwendung kommt. Der Reaktor besteht aus mehreren parallel zueinander angeordneten Wellblechplatten. Die Zwischenräume zwischen den Platten werden räumlich abwechselnd von einem Reaktionsgasgemisch für die endotherme Reaktion und einem Heinzgas durchströmt. Statt eines zwischen die Platten eingefüllten Schüttgutreaktors verwendet die DE 42 14 579 A1 für die endotherme katalytische Reaktion einen Katalysator, der auf den dem Reaktionspfad zugewandten Oberflächen der Platten als Beschichtung aufgebracht ist. Die am Heizpfad zugewendeten Oberfläche der Wellblechplatten sind nicht mit einem Katalysator beschichtet. Die notwendige Energie für die endotherme Reaktion wird dem Reaktor von außen durch ein heißes Heizgas zugeführt.

Nachteilig bei den letzten beiden Reaktoren ist die Tatsache, dass sie nur für relativ niedrige Temperaturen geeignet sind. Bei Reaktionstemperaturen über 800 °C und insbesondere bei den Reaktionstemperaturen für die Herstellung von Blausäure aus Methan und Ammoniak nach dem BMA-Verfahren von 1000 bis 1400°C neigen diese Reaktoren zu Verzunderungen der metallischen Platten, aus denen sie aufgebaut sind.

Das US-Patent 3,860,535 lehrt einen monolithischen Reaktor mit für Gegenstrom- oder Querstromführung geeigneten Strömungskanälen für eine endotherme Reaktion in einer ersten Gruppe von Kanälen und eine exotherme Reaktion in der zweiten Gruppe von Kanälen. Die Wände der Kanäle bestehen aus einem keramischen Material und sind mit einem ersten Katalysatorsystem für die endotherme Reaktion bzw. einem zweiten Katalysatorsystem für die zweite Reaktion beschichtet.

Die EP-A 0 639 548 offenbart ebenfalls einen monolithischen Reaktor aus keramischem Material, wobei der Reaktor voneinander getrennte Strömungskanäle für eine oxdative Methankopplung (exotherme Reaktion) und eine Dehydrierungsreaktion eines Kohlenwasserstoffs (endotherme Reaktion) aufweist. Die Kanalwände für die oxidative Methankopplung sind mit einem geeigneten Katalysator beschichtet. Das Dokument gibt keinen Hinweis, ob die Strömungskanäle für die Dehydrierungsreaktion eine katalytische Beschichtung aufweisen.

Auch der Reaktor gemäß WO 96/32188 umfassst in einem monolithischen Block aus einem keramischen Material parallele Kanalsysteme zur Druchführung einer endothermen und einer exothermen Reaktion, wobei jedes Kanalsystem eine katalytische Beschichtung aufweisen kann.

Aufgabe der vorliegenden Erfindung ist es daher, einen monolithischen Reaktor für die Durchführung endothermer katalytischer Reaktionen bei Temperaturen oberhalb 800°C anzugeben, der gegenüber diesen hohen Temperaturen beständig ist und eine verbesserte und stabile Verbrennung in den Heizkanälen aufweist. Gemäß einer weiteren Aufgabe sollte das Temperaturprofil längs der Heizkanäle leicht an die Erfordernisse der endothermen Reaktion angepasst werden können.

Diese Aufgabe wird durch eine anspruchsgemäßen Reaktor gelöst.

Gefunden wurde ein Reaktor zur Durchführung endothermer katalytischer Reaktionen, welcher eine Anordnung aus parallel zueinander verlaufenden Heiz- und Reaktionskanälen in einem monolithischen Block enthält, deren Wände aus einem temperaturbeständigen und gasundurchlässigen keramischen Material bestehen, wobei die Wände der Reaktionskanäle mit einem Katalysator für die Reaktion und die Heizkanäle mit einem Katalysator für die katalytische Verbrennung beschichtet sind, Heiz- und Reaktionskanäle eine Länge L aufweisen und jeweils in parallelen Schichten zusammengefasst sind, die ein oder mehrere Lagen von Heiz- bzw. Reaktionskanälen umfassen, und
dadurch gekennzeichnet ist,
dass Heiz- und Reaktionskanäle auf jeweils gegenüberliegenden Stirnflächen in axialer Richtung verschlossen sind, vor den Verschlüssen ausgehend von einer Seitenwand des Reaktors Öffnungen vorgesehen sind, die alle Strömungskanäle einer Lage untereinander und mit der Umgebung verbinden und
die Heizkanäle ausgehend von einer Stirnfläche über die ein Brenngas/Luftgemisch zugeführt wird bis in eine Tiefe von maximal 50 bis 90 % der Länge L der Heizkanäle nicht mit dem Verbrennungskatalysator beschichtet sind, oder
das Brenngas/Luftgemisch in die Heizkanäle mit Hilfe von Flammhalterrohren eingeführt wird, wobei die Länge der Flammhalterrohre ausgehend von der Strinfläche des Reaktors maximal 50 bis 90 % der Länge L der Heizkanäle beträgt.

In dem Reaktor sind Heiz- und Reaktionskanäle direkt benachbart. Um einen Durchtritt der Gase durch die Wände von Reaktionskanälen in die Heizkanäle und umgekehrt zu verhindern, ist der Reaktor aus einer gasdichten Keramik gefertigt, welche gegenüber den hohen Reaktionstemperaturen beständig ist. Eine solche Keramik weist eine spezifische Oberfläche auf, die nur unwesentlich über der geometrischen Oberfläche des Reaktors liegt.

Die Verbrennung in den Heizkanälen wird nicht elektrisch gezündet, sondern es wird eine katalytische Verbrennung vorgenommen. Der erfindungsgemäße Reaktor weist also zwei Katalysatoren mit unterschiedlichen Funktionen auf - einen "Reaktionskatalysator" für die Katalysierung der gewünschten Reaktions zwischen den Reaktanden und einen "Verbrennungskatalysator" für die Verbrennung des Brenngas/luft-Gemisches.

Als Verbrennungskatalysator kommen prinzipiell alle für die katalytische Verbrennung bekannten Katalysatoren in Frage. Einen guten Überblick über mögliche Katalysatormaterialien gibt der Artikel "Catalytic Materials for High-Temerature Combustion" von Marcus F.M. Zwinkels et al. In Catal. Rev.-Sci. Eng., 35 (3), 319 - 358 (1993).

Im Einzelfall muß der Katalysator für die katalytische Verbrennung auf die durchzuführende Reaktion und ihre Reaktionstemperatur abgestimmt werden.

Für Reaktionstemperaturen im Bereich von 25 bis 1200°C kommen alle Edelmetall-Katalysatoren und Edelmetall-Oxide in.. Betracht, wie zum Beispiel Palladium oder Platin und die Kombination beider Edelmetalle. Bei hohen Reaktionstemperaturen über 800°C, bei denen Palladiumoxid schon in metallisches Palladium übergeht, sind Kombinationen von Palladium und Platin besonders geeignet, da sie über einen größeren Temperaturbereich stabil sind. Durch Einstellen des Palladium/Platin-Verhältnisses kann der Katalysator für einen bestimmten Temperaturbereich optimiert werden.

Zur Beschichtung der Heizkanäle mit den katalytisch aktiven Komponenten des Verbrennungskatalysators werden dieselben Techniken wie für die Beschichtung von monolithischen Wabenkörpern für die Autoabgasreinigung eingesetzt. Wegen der geringen spezifischen Oberfläche des Wandmaterials des Reaktors werden als Träger für die katalytisch aktiven Komponenten in der Regel feinteilige oxidische Materialien mit spezifischen Oberflächen von mehr als 10 m²/g (gemessen mit Hilfe von Stickstoffadsorptionsisothermen nach DIN 66 132) verwendet. Geeignete Materialien sind beispielsweise aktive Aluminiumoxide (auch als Übergangsaluminiumoxide bezeichnet; siehe Ullmann's Encyclopedia of Industrial Chemistry, Fifth Edition, Vol. A1, 561 - 562 (1985)) und Übergangsmetalloxide (Eisenoxid, Manganoxid, Titanoxid, Zirkonoxid). Zur Erhöhung der Temperaturbeständigkeit können diese Trägermaterialien mit geeigneten Stabilisatoren wie zum Beispiel Seltenen Erdmetallen, Erdalkalimetallen und Silizium dotiert sein.

Die feinteiligen Trägermaterialien werden zu einer - in der Regel wäßrigen- Beschichtungsdispersion verarbeitet. Durch Tauchen des monolithischen Reaktors in diese Beschichtungsdispersion, Entfernen überschüssiger Dispersion und Kalzinieren werden die Heizkanäle mit den Trägermaterialien beschichtet. Um ein Beschichten der Reaktionskanäle mit dem Verbrennungskatalysator zu vermeiden, müssen die Reaktionskanäle vorher mit zum Beispiel Wachs oder Klebeband verschlossen werden. Die katalytisch aktiven Komponenten können vor oder nach der Beschichtung der Heizkanäle auf die Trägermaterialien durch Imprägnieren mit löslichen Vorstufen der katalytischen Komponenten aufgebracht werden.

Die Formulierung des Reaktionskatalysators hängt naturgemäß direkt von der durchzuführenden Reaktion ab. Im Falle der Herstellung von Blausäure aus Methan und Ammoniak wird bevorzugt ein Katalysator eingesetzt, der Platin und. Aluminiumnitrid enthält. Die EP 0 407 809 B1 sowie die nicht vorveröffentlichte DE 196 17 040 beschreiben Verfahren zur Herstellung eines solchen Katalysators.

Als Material für den Reaktor eignen sich Keramiken aus Oxiden, Karbiden und Nitriden sowie Mischungen davon. Handelt es sich bei diesen Keramiken um poröse Materialien, so müssen die Wände des Reaktors gasdicht beschichtet werden. Bevorzugt wird der Reaktor aus alpha- oder gamma-Aluminiumoxid gefertigt. Herstellungsbedingt kann dieses Material in geringem Umfang auch andere Oxide enthalten. Für den Reaktor werden keramische Materialien wegen ihrer hervorragenden thermischen Eigenschaften und ihrer hohen Korrosionsbeständigkeit im Vergleich zu Stahl verwendet.

Der erfindungsgemäß zu verwendende Reaktor in monolithischer Form kann mit Hilfe bekannter Extrusionstechniken aus den keramischen Materialien hergestellt werden.

Heiz- und Reaktionskanäle können in jedem beliebigen Muster über den Querschnitt des Monolithen verteilt sein. Zur Optimierung des Wärmeüberganges zwischen Heiz- und Reaktionskanälen und zur Erleichterung der Einspeisung des Brenngas/Luft-Gemisches bzw. des Reaktionsgasgemisches in die zugeordneten Kanäle ist es zweckmäßig, Heiz- und Reaktionskanäle jeweils in parallelen Schichten zusammenzufassen, die aus ein oder mehreren Lagen von Heiz- bzw. Reaktionskanälen bestehen. Die zweckmäßige Kanaldichte über den Querschnitt des Reaktors liegt bei 0,1 bis 100 cm⁻². Bei Kanaldichten unter 0,1 cm⁻² ist wegen der großen Querschnittsabmessungen der Kanäle der Wärmeaustausch zwischen Heiz- und Reaktionsgasen nicht mehr ausreichend gewährleistet. Mit zunehmender Kanaldichte wird die getrennte Ein- und Ausspeisung der Heiz- und Reaktionsgase in die ihnen zugeordneten Kanäle immer schwieriger. Kanaldichten oberhalb von 100 cm⁻² sind für das hier vorgestellte Reaktorkonzept nicht mehr sinnvoll zu nutzen.

Die direkte Koppelung der exothermen Verbrennung mit der endothermen Umsetzung in einem monolithischen Gegenstromreaktor bietet verschiedenartige Vorteile. Bei endothermen Reaktionen müssen zur Vermeidung von Rückreaktionen die Gasströme am Reaktoraustritt auf eine niedrige Temperatur abgeschreckt werden. Im Falle der Herstellung von Blausäure sollten die Produktgase zum Beispiel möglichst schnell auf Temperaturen unterhalb von 800°C abgekühlt werden. Außerdem sollte aus Wirtschaftlichkeitsgründen der Wärmeinhalt der austretenden Gasströme zurückgewonnen werden. Der erfindungsgemäße Reaktor vereint diese Funktionen wie die Reaktionsgasaufheizung, chemische Umsetzung, Abschrecken der Produktgase und Wärmerückgewinnung in einem Apparat.

Das Brenngas/Luft-Gemisch und das Reaktionsgasgemisch werden im kalten Zustand aus entgegengesetzten Richtungen in die jeweils zugeordneten Heiz- bzw. Reaktionskanäle eingespeist. Die einsetzende katalytische Verbrennung des Brenngas/Luft-Gemisches in den Heizkanälen ist nach einer gewissen Wegstrecke abgeschlossen. Die dabei frei werdende Wärmeenergie wird vom heißen Abgas auf das kalte Reaktionsgemisch durch indirekten Wärmetausch übertragen. Das nach der Umsetzung noch heiße Produktgasgemisch überträgt seinerseits seine Restwärme auf das einströmende kalte Brenngas/Luft-Gemisch. Durch geeignete Abstimmung der Volumenströme des Brenngas/Luft-Gemisches und des Reaktionsgemisches aufeinander kann der Reaktor so betrieben werden, daß sowohl die Abgase der Verbrennung als auch das Produktgasgemisch den Reaktor nahezu kalt wieder verlassen. Es liegen also hohe Temperaturgradienten längs des Reaktors vor. In Versuchen wurden maximale Temperaturgradienten von mehr als 250°C/cm ermittelt.

Diese neuartige Betriebsweise eines Gegenstromreaktors wird durch die Anordnung der Reaktions- und Heizkanäle in einem: monolithischen Block aus keramischem Material ermöglicht. Das keramische Material weist nur eine geringe Wärmeausdehnung auf. Der Reaktor wird daher durch die längs der Strömungswege auftretenden hohen Temperaturgradienten nicht deformiert oder zerstört.

Infolge des monolithischen Aufbaus weist der Reaktor auch dann noch eine gute mechanische Stabilität auf, wenn die Wandstärken der Strömungskanäle zur Optimierung des Wärmeaustausches zwischen den Heiz- und Reaktionskanälen minimiert werden. Der enge Kontakt zwischen Heiz- und Reaktionskanälen gewährleistet trotz der geringen Wärmeleitfähigkeit des Reaktormaterials noch einen ausreichend guten Wärmeübergang von den in den Heizkanälen strömenden Verbrennungsgasen auf die Reaktionsgase in den Reaktionskanälen.

Die geringe Wärmeleitfähigkeit des keramischen Materials verhindert in Verbindung mit den geringen Wandstärken der Strömungskanäle einen Temperaturausgleich längs der Strömungswege durch Wärmeleitung im Reaktormaterial.

Im Betrieb des erfindungsgemäßen Gegenstromreaktors bildet sich also längs des Reaktors ein ausgeprägtes Temperaturprofil aus. Im Falle der Synthese von Blausäure kann der Reaktor so betrieben werden, daß die beiden Stirnflächen Temperaturen unter 200° C aufweisen, während im Mittelteil des Reaktors die notwendigen Reaktionstemperaturen von 1000 bis 1350° C aufrecht erhalten werden können.

Zur Optimierung des Temperaturprofils kann die katalytische Verbrennung durch einen katalytisch unbeschichteten Bereich am Brenngaseintritt in das Innere des Reaktors verlagert werden. Dieser unbeschichtete Bereich kann ausgehend von der Eintrittsstirnfläche für das Brenngas/Luft-Gemisch bis in eine Tiefe von maximal 50 bis 90% der Gesamtlänge L des Reaktors reichen. Bevorzugt werden jedoch die Heizkanäle über ihre gesamte Länge mit dem Verbrennungskatalysator beschichtet. Die Optimierung des Temperaturprofils kann dann sehr einfach dadurch erfolgen, daß das Brenngas/Luft-Gemisch den Heizkanälen über Flammhalterrohre zugeführt wird. Die Flammhalterrohre können zur Anpassung des Temperaturprofils unterschiedlich weit in die Heizkanäle eingeführt werden. Die maximale Eintauchtiefe der Flammhalterrohre in die Heizkanäle kann ebenfalls 50 bis 90% der Gesamtlänge des Reaktors betragen.

Zum Starten der katalytischen Verbrennung ist es notwendig, in die Heizkanäle zuerst ein Gemisch aus Wasserstoff und Luft als Brenngas/Luft-Gemisch einzuführen. Dieses Gemisch kann vom Verbrennungskatalysator auch schon bei Raumtemperatur gezündet werden. Nach Erreichen von etwa 500°C im Mittelteil des Reaktors kann auf das eigentliche Brenngas umgeschaltet werden. Als Brenngas für den stationären Betrieb des Reaktors wird bevorzugt ein Gemisch aus Methan und Propen verwendet. Mit steigender Temperatur im Reaktor tritt zunehmend die homogene Verbrennung in Konkurrenz zur katalytischen Verbrennung. Bei Reaktionstemperaturen oberhalb von 1000°C dominiert die homogene Verbrennungsreaktion.

Das Brenngas/Luft-Gemisch und das Reaktionsgasgemisch müssen auf möglichst einfache Weise in die zugeordneten Kanäle des Reaktors eingespeist werden. Eine gute Lösung für dieses Problem stellt der in der US 4,271,110 beschriebene indirekte Wärmeaustauscher in Form eines monolithischen Wabenkörpers dar. In Analogie zu der Lehre der US 4,271,110 kann die Einspeisung und Ausspeisung der Gasströme wie folgt vorgenommen werden, wenn Heiz- und Reaktionskanäle abwechselnd in Lagen bzw. Reihen angeordnet sind: Das Brenngas/Luft-Gemisch wird der ersten Stirnfläche mit Hilfe eines auf die Stirnfläche aufgesetzten kegelförmigen Stutzens zugeführt. Das Reaktionsgasgemisch wird in entsprechender Weise der zweiten Stirnfläche zugeführt. Die Strömungskanäle sind auf der der jeweiligen Einspeisungs-Stirnfläche gegenüberliegenden Stirnfläche in axialer Richtung verschlossen, um eine Vermischung der beiden Gasströmungen zu verhindern. Die Ausspeisung der Gasströme wird über die Seitenflächen des Reaktors vorgenommen. Hierzu sind ausgehend von einer Seitenfläche Öffnungen in den Reaktor eingearbeitet, die alle Kanäle. einer Lage miteinander verbinden. Durch Aufsetzen eines Gasstutzens auf die Seitenfläche des Reaktors können die aus den einzelnen Lagen austretenden Gasströme zusammengefaßt werden.

Das folgende Beispiel soll die Erfindung weiter verdeutlichen. Es zeigen:
- Figur 1:: Bevorzugte Anordnung von Heiz- und Reaktionskanälen über den Querschnitt des Reaktors des Beispiels.
- Figur 2:: Längsschnitt durch den Reaktor
- Figur 3:: Schnitt längs der Ebene AA von Figur 2
- Figur 4:: Längsschnitt durch einen Reaktor mit Flammhalterrohren
- Figur 5:: Schnitt längs der Ebene AA von Figur 4
- Figur 6:: Temperaturprofil längs des Reaktors von Figur 2 bei der Synthese von Blausäure
- Figur 7:: Temperaturprofil längs des Reaktors von Figur 4 mit Flammhalterrohren

### Beispiel 1:

Als Reaktor für die Synthese von Blausäure wurde ein gasdichter Monolith mit 15,5 Zellen pro Quadratzentimeter aus α-Aluminiumoxid verwendet. Der Reaktor hatte eine Länge von 50 cm und einen Querschnitt von 2,6 x 2,6 cm mit insgesamt 100 Kanälen (10 x 10-Matrix). Die freie Öffnung der Strömungskanäle hatte Abmessungen von etwa 2 x 2 mm². Die Dicke der Kanalwände betrug etwa 0,55 mm.

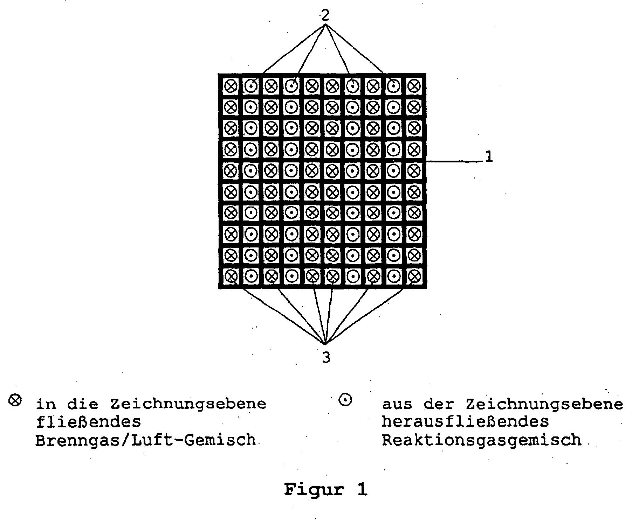

Dieser Monolith wurde aus Gründen der Symmetrie wie in Figur 1 gezeigt, in 60 Heiz- und 40 Reaktionskanäle unterteilt. Das Volumen von Heiz- und Reaktionskanälen betrug zusammen 0,2 l, wovon 0,08 l auf die Reaktionskanäle entfielen. Heiz- und Reaktionskanäle waren in Reihen zusammengefaßt. Die Bezugsziffer 1 in Figur 1 bezeichnet den Monolithen. 2 bezeichnet die Lagen der Reaktionskanäle und 3 die Lagen der Heizkanäle.

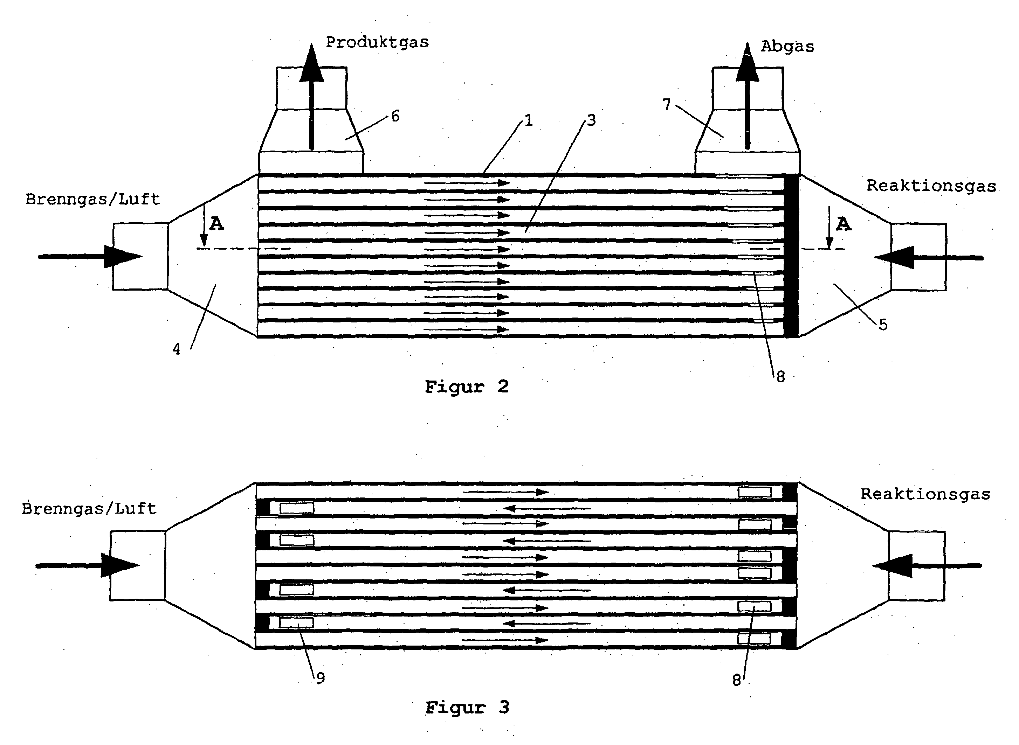

Figur 2 zeigt einen Längsschnitt durch den Reaktor mit den auf die Stirnflächen aufgesetzten Gaszuführungsstutzen 4, 5 für das Brenngas/Luft-Gemisch bzw. für das Reaktionsgasgemisch und den Gasabführungsstutzen 6, 7 auf der Seitenwand des Reaktors.

Der in Figur 2 gezeigte Längsschnitt durch den Reaktor ist parallel zu einer Lage der Heizkanäle geführt. Das Brenngas/Luft-Gemisch wird mit Hilfe des Zuführungsstutzens 4 in die Heizkanäle 3 eingespeist und strömt zur zweiten Stirnfläche. An dieser zweiten Stirnfläche sind die Heizkanäle axial verschlossen. Die Ausspeisung des Abgases nach erfolgter Verbrennung wird über öffnungen 8 vorgenommen, die von einer Seitenwand des Reaktors parallel zur Lage der Heizkanäle in die Trennwände der Heizkanäle eingearbeitet sind und alle Heizkanäle mit dem Abgasstutzen 7 verbinden.

In analoger Weise wird das Reaktionsgasgemisch im Gegenstrom zum Brenngas/Luft-Gemisch durch den Reaktor geführt und als Produktgasgemisch über den Gasstutzen 6 ausgespeist.

Figur 3 zeigt einen Schnitt durch den Reaktor parallel zur Ebene AA von Figur 2. Sie zeigt die wechselseitig verschlossenen Heiz- und Reaktionskanäle sowie die in die Trennwände der Kanäle eingearbeiteten Öffnungen 8, 9 zur Ausspeisung der Gasströme.

Die Reaktionskanäle des Reaktors wurden mit 2,77 g Reaktionskatalysator nach Beispiel 2 aus der EP 0 407 809 B1 beschichtet.

Zur Herstellung des Verbrennungskatalysator wurden 500 g Zirkonoxidpulver (spezifische Oberfläche 100 m²/g) mit einer Edelmetallösung aus 48,9 g Platinnitrat (30,7 Gew.-% Platin) und 542,2 g Palladiumnitrat (8,3 Gew.-% Palladium) imprägniert. Das imprägnierte Pulver wurde bei 150°C getrocknet und anschließend 4 Stunden bei 600° C kalziniert (Aufheizrate 200°C/h). Anschließend wurde das Pulver in einer Gasmischung von 5 Vol.-% Wasserstoff in Stickstoff (Formiergas) bei 500°C für die Dauer von 3 Stunden reduziert. Nach Abkühlen des Pulvers wurde es in Wasser dispergiert und damit die Innenwände der Heizkanäle beschichtet. Der fertige Reaktor enthielt 2,31 g Verbrennungskatalysator.

Zur Formierung des Reaktionskatalysators wurde zunächst die Verbrennung in den Heizkanälen gestartet. Hierzu wurde ein Gemisch aus Wasserstoff und Luft durch die Heizkanäle und im Gegenstrom dazu Ammoniak durch die Reaktionskanäle geleitet. Nachdem sich durch die Verbrennung des Wasserstoffs eine Temperatur von über 500°C eingestellt hatte, wurde der Wasserstoff durch Methan und Propen ersetzt. Die Volumenströme der einzelnen Gase betrugen 411 l/h Luft, 32 l/h Methan und 0,5 l/h Propen in den Heizkanälen und 251 l/h Ammoniak in den Reaktionskanälen. Nach Erreichen einer Temperatur von 1000°C wurde die Einspeisung der Gase für weitere 12 Stunden weitergeführt. Danach wurde dem Ammoniak in den Reaktionskanälen langsam Methan bis zu einem Verhältnis von Ammoniak zu Methan von 1,12 zugegeben, so daß während der Synthese von Blausäure etwa 530 l des Ammoniak/Methan-Gemisches pro Stunde in die Reaktionskanäle des Reaktors eingeführt wurden, entsprechend einer Raumgeschwindigkeit von 6625 h⁻¹. Die Strömungsgeschwindigkeit des Reaktionsgasgemisches in den Reaktionskanälen betrug somit 0,27 m/s.

Der Reaktor lieferte im stationären Betrieb 78 % Blausäure bezogen auf eingesetztes Methan. Die Temperatur des Reaktors am Eintritt des Brenngas/Luft-Gemisches betrug 112°C, am Eintritt des Reaktionsgasgemisches 157°C.

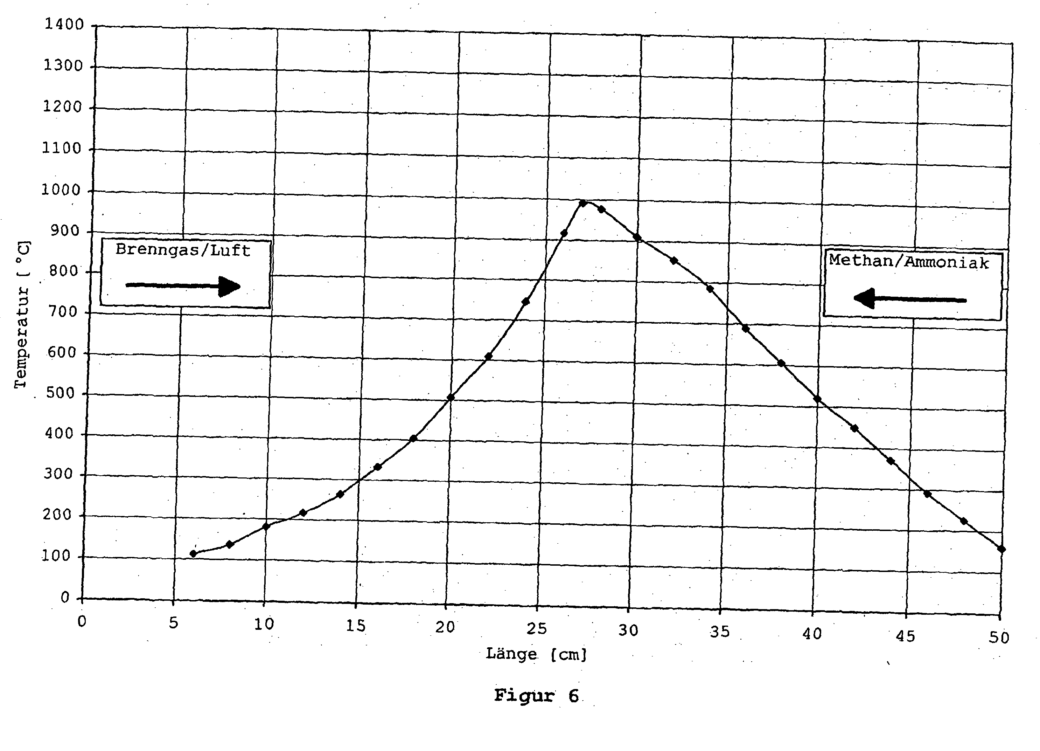

Figur 6 zeigt das längs des Reaktors mit einem Thermoelement gemessene Temperaturprofil während der Synthese von Blausäure.

### Beispiel 2:

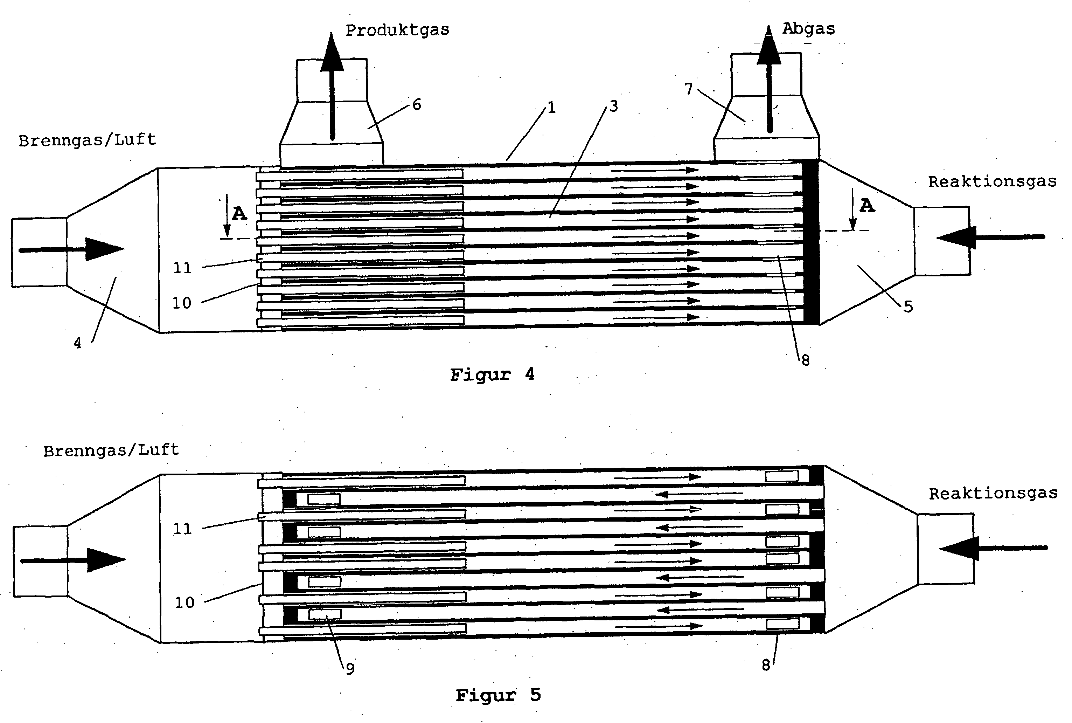

Der Reaktor von Beispiel 1 wurde entsprechend der Figur 4 durch Flammhalterrohre 11 modifiziert. Die Flammhalterrohre wurden an einem Zwischenboden 10 im Gaszuführungsstutzen 4 befestigt und bis zu einer Tiefe von 20 cm in die Heizkanäle eingeführt. Hierdurch startete die Verbrennung erst am Auslaß der Flammhalterrohre in einer Tiefe von 20 cm im Innern des Reaktors. Figur 5 zeigt einen Schnitt durch den Reaktor parallel zur Ebene AA von Figur 4.

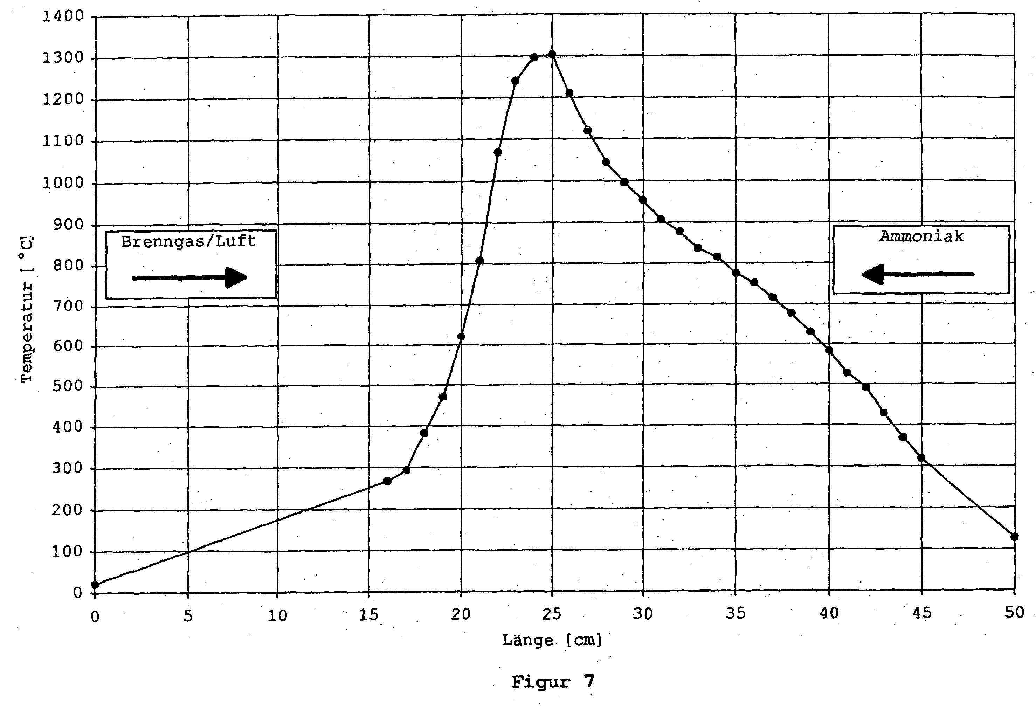

Zweck dieser Modifikation war es, ein noch steileres Temperaturprofil als im vorhergehenden Beispiel zu erzeugen. In den Heizkanälen wurde dieselbe Brenngas/Luft-Mischung wie in Beispiel 1 verbrannt. Zur Erleichterung der Messungen wurde auf die Synthese von Blausäure verzichtet. Durch die Reaktionskanäle wurden daher nur 110 l Ammoniak pro Stunde geleitet. Das gemessene Temperaturprofil zeigt Figur 7.

Am Eintritt des Brenngas/Luft-Gemisches in den Reaktor wurden 22°C gemessen. Die Verbrennung startete am Auslaß der Flammhalterrohre in einer Tiefe von 20 cm. Die Temperatur im Reaktor erreichte in Reaktormitte 1300°C. Der maximale Temperaturgradient längs des Reaktors betrug 260°C. pro cm. Im Falle der Herstellung von Blausäure bedeutete dies, daß die gebildete Blausäure innerhalb einer Strecke von nur 4 cm auf von 1300°C auf 800°C abgekühlt würde.

Bemerkenswert bei dieser Anordnung ist die Tatsache, daß der Reaktor am Eintritt des Brenngas/Luft-Gemisches nur Raumtemperatur und am Austritt eine ebenfalls sehr niedrige Temperatur von etwas mehr als 100°C aufweist. Dies bedeutet zum einen eine sehr gute Wärmerückgewinnung und Energieausnutzung im Reaktor. Zum anderen ermöglicht die geringe Temperatur am Brenngaseintritt die Konstruktion einer einfachen Verschiebeeinrichtung für die Flammhalterrohre, mit der der Beginn der Verbrennung längs des Reaktors verändert werden kann.

Der erfindungsgemäße Reaktor ermöglicht also bei endothermen Reaktionen eine bisher nicht erreichbar hohe Energieeffizienz und erlaubt eine einfache Anpassung des Temperaturprofils längs des Reaktors an die Erfordernisse der endothermen Reaktion. Die katalytische Verbrennung in den Heizkanälen läuft äußerst stabil.

## Patentansprüche

1. Reaktor zur Durchführung endothermer katalytischer Reaktionen, welcher eine Anordnung aus parallel zueinander verlaufenden Heiz- und Reaktionskanälen in einem monolithischen Block enthält, deren Wände aus einem temperaturbeständigen und gasundurchlässigen keramischen Material bestehen, wobei die Wände der Reaktionskanäle mit einem Katalysator für die Reaktion und die Heizkanäle mit einem Katalysator für die katalytische Verbrennung beschichtet sind, Heiz- und Reaktionskanäle eine Länge L aufweisen und jeweils in parallelen Schichten zusammengefasst sind, die ein oder mehrere Lagen von Heiz- bzw. Reaktionskanälen umfassen,
**dadurch gekennzeichnet,**
**dass** Heiz- und Reaktionskanäle auf jeweils gegenüberliegenden Stirnflächen in axialer Richtung verschlossen sind, vor den Verschlüssen ausgehend von einer Seitenwand des Reaktors Öffnungen vorgesehen sind, die alle Strömungskanäle einer Lage untereinander und
mit der Umgebung verbinden und
die Heizkanäle ausgehend von einer Stirnfläche über die ein Brenngas/Luftgemisch zugeführt wird bis in eine Tiefe von maximal 50 bis 90 % der Länge L der Heizkanäle nicht mit dem Verbrennungskatalysator beschichtet sind, oder
das Brenngas/Luftgemisch in die Heizkanäle mit Hilfe von Flammhalterrohren eingeführt wird, wobei die Länge der Flammhalterrohre ausgehend von der Stirnfläche des Reaktors maximal 50 bis 90 % der Länge L der Heizkanäle beträgt.

2. Reaktor nach Anspruch 1,
**dadurch gekennzeichnet,**
**dass** auf die Stirnfläche des Reaktors Gas zuführungsstutzen für das Brenngas/Luftgemisch bzw. für das Reaktionsgasgemisch aufgesetzt sind und dass die seitlichen Öffnungen der Heizkanäle bzw. der Reaktionskanäle durch aufgesetzte Gasführungsstutzen zusammengefasst sind.

3. Reaktor nach Anspruch 1 oder 2,
**dadurch gekennzeichnet,**
**dass** der Reaktor Kanaldichten zwischen 0,1 und 100 cm⁻² aufweist und aus Oxid-, Carbid- oder Nitridkeramiken oder Mischkeramiken angefertigt ist.

4. Verwendung des Reaktors nach einem der Ansprüche 1 bis 3 für die Herstellung von Blausäure aus Ammoniak und Methan.

## Claims

1. A reactor for performing endothermic catalytic reactions which contains an arrangement of heating and reaction channels running parallel to each other in a monolithic block, the walls of which consist of a heat-resistant and gas-impermeable ceramic material, wherein the walls of the reaction channels are coated with a catalyst for the reaction and the heating channels are coated with a catalyst for catalytic combustion, the heating and reaction channels have a length L and each are arranged in parallel layers which contain one or more strata of heating or reaction channels,
**characterised in that**
heating and reaction channels are each sealed in the axial direction at opposite end faces, openings are provided in front of the seals, starting from a side wall of the reactor, which link all the flow channels in one stratum with each other and with the surroundings and
the heating channels, starting from an end face via which a fuel gas/air mixture is supplied, up to a maximum depth of 50 to 90 % of length L of the heating channels, are not coated with the combustion catalyst,
or
the fuel gas/air mixture is introduced into the heating channels with the aid of flame retaining pipes, wherein the maximum length of the flame retaining pipes, starting from the end face of the reactor, is 50 to 90 % of the length L of the heating channels.

2. A reactor according to Claim 1,
**characterised in that**
gas feed ports for the fuel gas/air mixture and for the reaction gas mixture respectively are mounted on the end faces of the reactor and that the lateral openings for the heating channels and reaction channels respectively are formed by fitted gas supply ports.

3. A reactor according to Claim 1 or 2,
**characterised in that**
the reactor has channel densities between 0.1 and 100 cm⁻² and is made from oxide, carbide or nitride ceramics or mixed ceramics.

4. Use of the reactor according to one of Claims 1 to 3 for preparing hydrocyanic acid from ammonia and methane.

## Revendications

1. Réacteur pour l'exécution de réactions catalytiques endothermiques qui renferme une disposition en canaux de chauffage et en canaux de réaction qui s'étendent parallèlement l'un par rapport aux autres dans un bloc monolithique, dont les parois consistent en un matériau céramique résistant à la chaleur et imperméable aux gaz, dans lequel les parois des canaux de réaction sont revêtues d'un catalyseur pour la réaction et les canaux de chauffage sont revêtus d'un catalyseur pour la combustion catalytique, les canaux de chauffage et les canaux de réaction possèdent une longueur L et respectivement sont réunis en couches parallèles qui comprennent une ou plusieurs couches de canaux de chauffage ou de réaction,
**caractérisé en ce que**
les canaux de chauffage et les canaux de réaction sont obturés sur les surfaces frontales opposées respectivement dans la direction axiale, avec devant les obturations à partir d'une paroi latérale du réacteur des ouvertures prévues qui relient tous les canaux d'écoulement d'une couche l'un sous l'autre et à l'environnement, et les canaux de chauffage en partant d'une face frontale sur laquelle un mélange gaz de combustion/air est amené, jusqu'à une profondeur d'au maximum 50 à 90 % de la longueur L des canaux de chauffage ne sont pas revêtus du catalyseur de combustion,
ou bien, le mélange de gaz de combustion/air est introduit dans les canaux de chauffage à l'aide de tubes d'accrocheur de flamme, dans lesquels la longueur des tubes d'accrocheur de flamme à partir de la surface frontale du réacteur est au maximum de 50 à 90 % de la longueur L des canaux de chauffage.

2. Réacteur selon la revendication 1,
**caractérisé en ce que**
sur les surfaces frontales du réacteur, des raccords de conduite du gaz pour le mélange gaz de combustion/air ou pour le mélange de gaz de réaction sont appliqués, et les orifices latéraux des canaux de chauffage ou des canaux de réaction sont réunis par les raccords de conduite de gaz appliqués.

3. Réacteur selon l'une quelconque des revendications 1 ou 2,
**caractérisé en ce que**
le réacteur possède des densités de canaux comprises entre 0,1 et 100 cm⁻² et est fabriqué en céramiques, d'oxyde, de carbure ou de nitrure, ou en céramiques mixtes.

4. Utilisation du réacteur selon l'une quelconque des revendications 1 à 3,
pour la production d'acide cyanhydrique à partir d'ammoniac et de méthane.
